# EUROPEAN PATENT APPLICATION

(11) **EP 2 224 767 A1**
(43) Date of publication of application: **01.09.2010**
(21) Application number: 09290142.0
(22) Date of filing: 27.02.2009
(51) Int. Cl.: H04W 28/16

(54) **An arrangement and a method for allocating RF resources**

(71) Applicant: Alcatel Lucent, 75008 Paris (FR)
(72) Inventor: Schreiber, Gerhard, Dr., 70825 Korntal-Münchingen (DE); Dötsch, Uwe, Dr., 74392 Freudental (DE)
(74) Representative: Kohler Schmid Möbus

(57) **Abstract**

The present invention relates to an arrangement (10) and a method for allocating RF resources to at least one mobile communication unit (MGU) connected in a mobile communication system (1). The allocating arrangement (10) comprises resource unit grouping means (11) configured for combining resource units (RUi) to resource groups (RG), each resource group (RG) comprising a dedicated number of resource units (RUi) which number defines a resource group length RG_L. The allocating arrangement (10) further includes scheduling means (12) configured for determining a number N of required resource units (RUi) which the connected mobile communication unit (MCU) shall receive, and resource unit allocating means (13) configured for allocating to said connected mobile communication unit (MCU) an actual number of free resource units (RUi) equal to an integer multiple (including 1) of said resource group length (RG_L), if said number N of required resource units (RUi) is equal to or larger than said resource group length RG_L.

## Description

### Field of the invention

The present invention relates to an arrangement for allocating RF resources to at least one mobile communication unit connected in a mobile communication system, and to a corresponding allocation method.

### Description of Related Art

In general, mobile communication systems comprise a scheduler for allocating RF resources in time and frequency. The scheduler normally serves a number of connections to mobile communication units. However, known schedulers configured to allocate RF resources to mobile communication units connected in a mobile communication system until now require high computing power because much iterations and calculations and further large memory space are needed.

### Summary of the Invention

It is therefore an object of the present invention to achieve an arrangement and a method for allocating RF sources to at least one mobile communication unit connected in a mobile communication system, wherein said arrangement and method shall be able to reduce the number of arithmetic calculations, achieve a fast execution of resource allocation and to reduce memory requirements.

According to a first essential aspect, the present invention provides an arrangement for allocating RF resources to at least one mobile communication unit connected in a mobile communication system, said arrangement comprising: resource unit grouping means configured for combining resource units to resource groups, each resource group comprising a dedicated number of resource units defining a resource group length RG_L; scheduling means configured for determining a number N of required resource units the connected mobile communication unit shall receive, and resource unit allocating means configured for allocating to the connected mobile communication unit an actual number of resource units equal to an integer multiple (including one) of said resource group length RG_L, if said number N of required resource units is equal to or larger than said resource group length RG_L.

In this arrangement according to the invention the resource group length RG_L defined by said resource unit grouping means includes typically more than one resource unit. If the number N of required resource units equal to or larger than said resource group length RG_L, allocation of a number N' of resource units corresponding to an integer multiple of the resource group length is performed, thus reducing the complexity of the resource allocation algorithm. The number N of required resource units is determined by the scheduling means inter alia in dependence of the maximum transmission power of the mobile communication unit.

In an advantageous development, the resource unit allocating means are configured for determining said integer multiple by performing an integer division of said number N of required resource units by said resource group length RG_L, i.e. the actual number is N' = (N / RG_L)*RG_L, wherein the symbol "/" designates the integer division (next smallest integer). Numerical simulations show that such an algorithm leads to faster execution of the scheduling process, because it reduces the number of calculations and iterations, also saving memory. However, as the actual number N' of allocated resource units is less than or equal to the required number N of resource units, not all required resource units may be allocated to the communication unit in the scheduling process, such that the throughput performance of the system may be slightly reduced. However, as will be shown below, the loss of throughput performance is negligible as long as the resource group size does not become too large.

Further, according to an advantageous development, in the present allocation arrangement said resource unit allocating means are configured for allocating to the connected mobile communication unit an actual number of N resource units, if said number N of said required resource units is smaller than said resource group length RG_L. Thus, the resource group is "resized" to the number N of required resource units. Such an approach is advantageous, as the number of allocated resource units is zero when applying the integer division algorithm described above when the required number N of resource units is smaller than the resource group length RG_L. It will be understood, however, that alternatively, the integer division algorithm described above may also be applied in case that the required number N of resource units is smaller than the resource group length.

According to a second essential aspect, the present invention also provides a method for allocating RF resources to at least one mobile communication unit connected in a mobile communication system, said method comprising steps of: combining resource units to resource groups, each resource group comprising a dedicated number of resource units defining a resource group length RG_L; determining a number N of required resource units the connected mobile communication unit shall receive, and allocating to the connected mobile communication unit an actual number of resource units equal to an integer multiple (including one) of said resource group length RG_L if said number N of required resource units is equal to or larger than said resource group length RG_L.

In the present method, advantageously, said integer multiple is determined by performing an integer division of said number N of said required resource units by said resource group length RG_L.

Further, according to a preferred advantageous development, the method further comprises: allocating to said connected mobile communication unit said number N of said required resource units, if said number N of said required resource units is smaller than said resource group length RC_L.

Further, the present invention also encompasses a base station for a mobile communication system, said base station including the allocation arrangement according to the present invention.

According to a further important aspect, the present invention also encompasses a mobile communication system / radio network which includes the arrangement of the present invention.

According to a further important aspect, the present invention encompasses a computer program product comprising code means for performing the steps of the method according to the invention.

The arrangement for allocating RF resources to at least mobile communication unit as well as the related allocating method achieve following advantages:
- fast execution of resource allocation because of a significant reduction in the number of arithmetic calculations, and
- reduced memory requirements.

### Brief Description of the Drawings

- Fig. 1: schematically shows a functional block diagram of an embodiment of the present allocating arrangement.
- Fig. 2: schematically shows an action of resource unit grouping for combining free resource units to a resource group.
- Fig. 3: schematically shows resizing of scheduled resource groups.
- Fig. 4: graphically shows simulation results of throughput versus gamma values of four different resource group lengths without resource group resizing, and
- Fig. 5: graphically shows simulation results of throughput versus gamma values for the same four different resource group lengths as in Fig. 4, however, with resource group resizing.

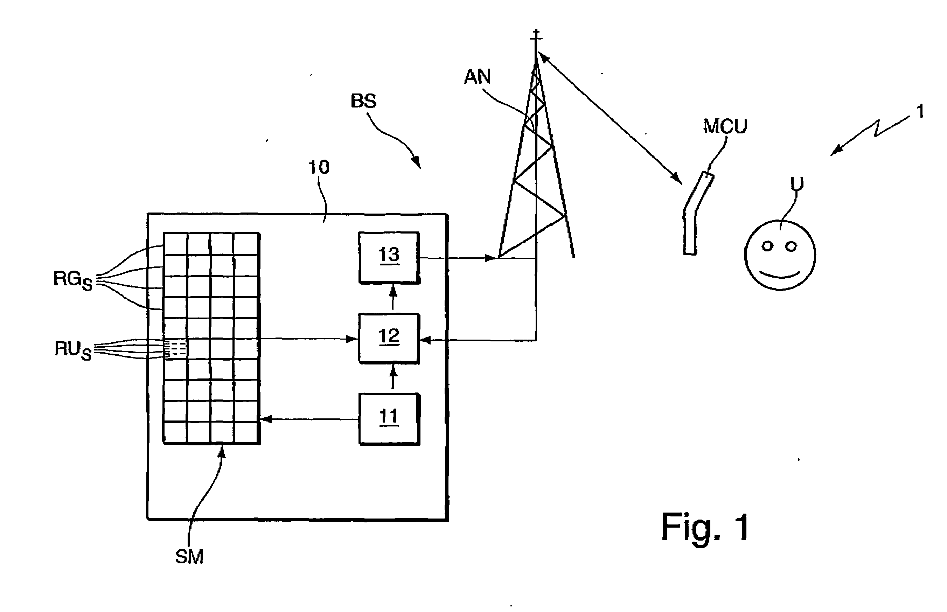

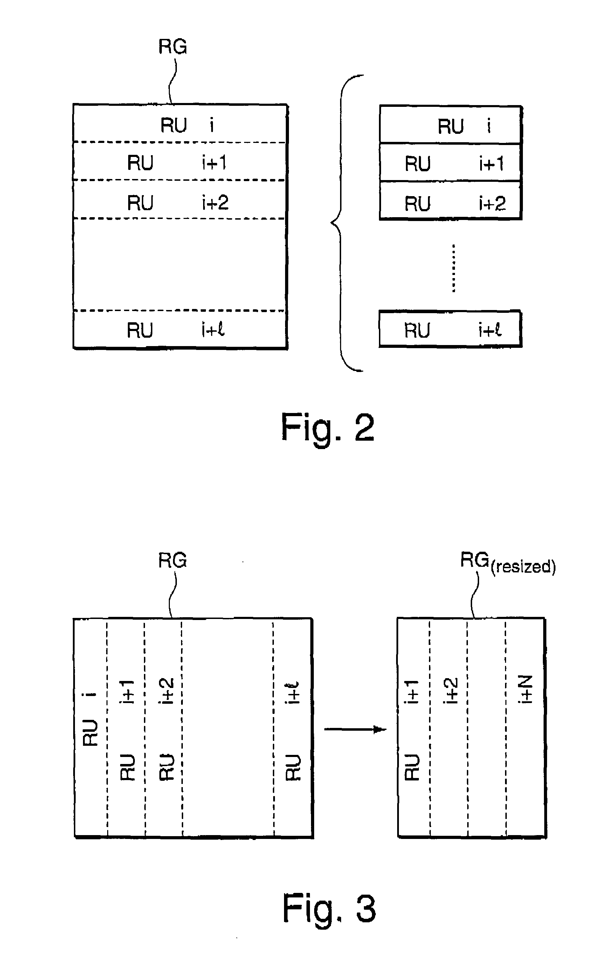

The functional block diagram depicted in **Fig. 1** shows an embodiment of the allocating arrangement according to the present invention configured for allocating RF resources to at least one mobile communication unit MCU. The allocating arrangement is shown in a box 10 which for example may be comprised in a base station (BS) of a mobile communication system 1. The present allocating arrangement 10 comprises several functional units 11 to 13. Resource unit grouping means 11 perform a combination of resource units RUs (in Fig. 2 designated by RUi, RUi+1, RUi+2, ..... RUi+I) to resource groups RGs, the resource groups RGs forming a scheduling matrix SM. The number of rows of the scheduling matrix SM corresponds to the number of mobile communication units scheduled. The grouping of the resource units RUs into resource groups RGs may be, but not necessarily, achieved by the collection of next neighbor resource units Rus in the frequency space, wherein a resource unit RU is the smallest unit or element an allocating unit can allocate to a connection.

Referring to **Fig. 2****,** each resource group RG formed by the resource unit grouping means 11 comprises a dedicated number of resource units RU which number defines a resource group length RG_L. The optimum value for the resource group length RG_L for the communication system 1 may be determined based on numerical simulations, as will be explained in greater detail below.

Again referring to Fig.1, the allocating arrangement 10 further comprises scheduling means 12 operatively coupled to the resource unit grouping unit 11 and configured for determining a number N of resource units required by a connected mobile communication unit MCU, e.g., on the basis of power requirements, type of the MCU and/or requirements desired by the user U of the mobile communication unit MCU received at an air interface, e.g., an antenna A coupled to the base station BS comprising the allocating arrangement 10.

The allocating arrangement 10 of the present invention further includes resource unit allocating means 13 coupled to the scheduling means 12 and to the antenna A and configured for allocating to the connected mobile communication unit MCU an actual number N' of resource units RUs contained in the resource groups RGs of the scheduling matrix SM. This actual number N' of resource units allocated by the resource unit allocating means 13 equals to an integer multiple (including one) of the resource group length RG_L (cf. Fig. 2). The integer multiple is determined in the resource unit allocating means 13 by performing an integer division of said number N of required resource units RUi (see Fig. 2) by said resource group length RG_L, i.e. is equal to N / RG_L, the actual number of resource units being N' = (N / RG_L)*RG_L. For example, for a resource group length RG_L of 2 and a number N = 5 of required resource units RUi, the integer multiple is 2 and the actual number N' of attributed resource units RUi is 4, i.e. two resource groups RGs are attributed to the mobile communication unit MCU.

**Fig. 3** diagrammatically depicts a performance of the resource unit allocating means 13 for the case that the number N of the required resource units RUi is below the resource group size RG_L. In this case, the resource unit allocating means 13 carries out a resizing of the resource group RG, i.e. the number of resource units RUi to be allocated to the connected mobile communication unit MCU by allocating the number N of required resource units RUi to the connected mobile communication unit MCU.

Upon studying the above description, it is easily understandable that the scheduling means 12 determines the number N of required resource units RUs the connected mobile communication unit MCU shall receive, and, if the number N of required resource units RUs is below a predefined threshold corresponding to the resource group length RG_L, the resource unit allocating means 13 allocates N resource units RUs to that connection of the mobile communication unit MCU. Otherwise, if the number N of required resource units RUs is equal to or larger than the threshold (resource group length RG_L), then the connection of the mobile communication unit MCU receives a number of resource units RUs equal to an integer multiple of the resource group length RG_L.

In numerical simulations it has been demonstrated that the present allocating arrangement and the related method for allocating RF resources to at least one mobile communication unit connected in a mobile communication system lead to a faster execution of the scheduling and allocating process, because the inventive means and steps reduce the number of calculations and iterations and also save memory space. A certain loss in the throughput performance is negligible as the resource group length RG_L becomes not too large.

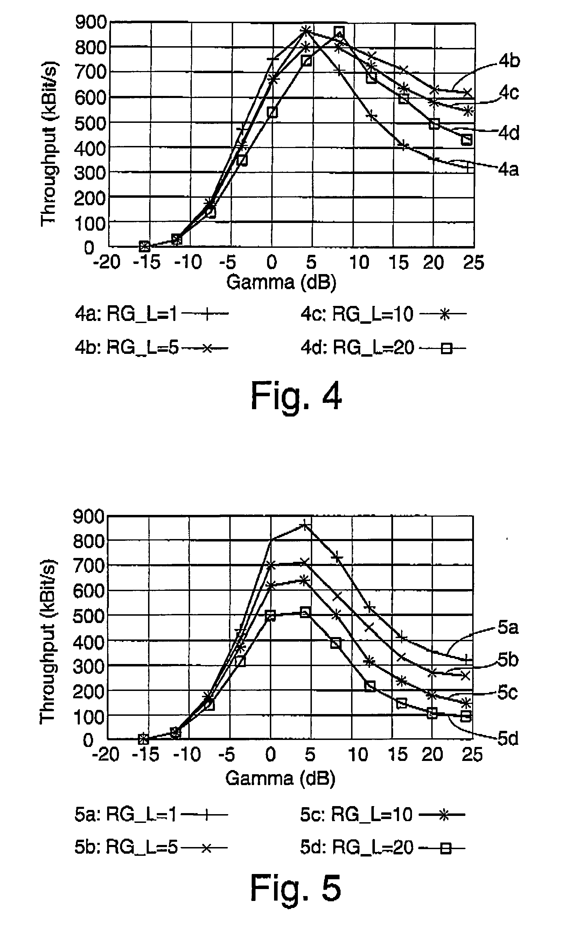

The results of the numerical simulations without and with the resource unit allocating means 13 performing the step of resource group resizing, are respectively graphically represented by the accompanying **Figures 4 and 5****.** In the simulations, the resource group length RG_L is a variable parameter, wherein curves 4a and 5a have the parameter RG_L = 1, curves 4b and 5b have the parameter RG_L = 5, curves 4c and 5c have the parameter RG_L = 10 and the curves 4d and 5d have the parameter RG_L = 20.

The diagrams shown in Figs. 4 and 5 are each graphically depicting the throughput [kBit/s] versus the gamma value (dB).

A comparison of the curves 4a-4d in Fig. 4 with the curves 5a-5d of Fig. 5 clearly demonstrates that the curves 5b, 5c and 5d respectively representing a resource group length RG_L = 5, RG_L = 10 and LG_L = 20 of resource unit allocation with resizing have an essentially lower deviation of the gamma value from the gamma value for the maximum throughput.

Moreover, the simulation results as depicted in Figs. 4 and 5 demonstrate the advantages of the present invention, namely a fast execution of resource allocation because of a significant reduction in the number of arithmetic calculations and the reduced memory requirements, with a negligible loss in throughput performance as long as the resource group size RG_L is not chosen to be exceedingly large.

The above description describes the arrangement for allocating RF resources and the relating allocating method for one mobile communication unit MCU connected in a mobile communication system. However, the skilled person will easily take from the above description that the present allocating arrangement and allocating method can be generally applied for an arbitrary number of connections of mobile communication units.

## Claims

1. An arrangement (10) for allocating RF resources to at least one mobile communication unit (MCU) connected in a mobile communication system (1), said arrangement (10) comprising:
- Resource unit grouping means (11) configured for combining resource units (RUi) to resource groups (RG), each resource group (RG) comprising a dedicated number of resource units (RUi) defining a resource group length RG_L;
- Scheduling means (12) configured for determining a number N of required resource units (RUi) the connected mobile communication unit (MCU) shall receive, and
- Resource unit allocating means (13) configured for allocating to said connected mobile communication unit (MCU) an actual number of resource units (RUi) equal to an integer multiple (including one) of said resource group length RG_L, if said number N of required resource units (RUi) is equal to or larger than said resource group length RG_L.

2. The arrangement for allocating RF resources as claimed in claim 1, wherein said resource unit allocating means (13) are configured for determining said integer multiple by performing an integer division of said number N of required resource units (RUi) by said resource group length RG_L.

3. The arrangement for allocating RF resources as claimed in claim 1, wherein said resource unit allocating means (13) are configured for allocating to said connected mobile communication unit (MCU) said number N of required resource units (RUi), if said number N of said required resource units (RUi) is smaller than said resource group length RG_L.

4. A base station (BS) for a mobile communication system (1), said base station (BS) comprising an arrangement (10) for allocating RF resources to at least one mobile communication unit (MCU) connected to said base station (BS), said arrangement (10) comprising:
- Resource unit grouping means (11) configured for combining resource units (RUi) to resource groups (RG), each resource group (RG) comprising a dedicated number of resource units (RUi) defining a resource group length RG_L;
- Scheduling means (12) configured for determining a number N of required resource units (RUi) the connected mobile communication unit (MCU) shall receive, and
- Resource unit allocating means (13) configured for allocating to said connected mobile communication unit (MCU) an actual number of resource units (RUi) equal to an integer multiple (including one) of said resource group length RG_L, if said number N of required resource units (RUi) is equal to or larger than said resource group length RG_L.

5. The base station (BS) for a mobile communication system (1) as claimed in claim 4, wherein said resource unit allocating means (13) are configured for determining said integer multiple by performing an integer division of said number N of required resource units (RUi) by said resource group length RG_L.

6. The base station (BS) for a mobile communication system (1) as claimed in claim 4, wherein said resource unit allocating means (13) are configured for allocating to said connected mobile communication unit (MCU) said number N of said required resource units (RUi), if said number N of said required resource units (RUi) is smaller than said resource group length RG_L.

7. A mobile communication system (1), in particular a radio network, including an arrangement (10) for allocating RF resources to at least one mobile communication unit (MCU) connected in said communication system (1), said arrangement (10) comprising:
- Resource unit grouping means (11) configured for combining resource units (RUi) to resource groups (RG), each resource group (RG) comprising a dedicated number of resource units (RUi) defining a resource group length RG_L;
- Scheduling means (12) configured for determining a number N of required resource units (RUi) the connected mobile communication unit (MCU) shall receive, and
- Resource unit allocating means (13) configured for allocating to said connected mobile communication unit (MCU) an actual number of resource units (RUi) equal to an integer multiple (including one) of said resource group length RG_L, if said number N of required resource units (RUi) is equal to or larger than said resource group length RG_L.

8. The mobile communication system (1) as claimed in claim 7, wherein said resource unit allocating means (13) are configured for determining said integer multiple by performing an integer division of said number N of required resource units (RUi) by said resource group length RG_L.

9. The mobile communication system as claimed in claim 7, wherein said resource unit allocating means (13) are configured for allocating to said connected mobile communication unit (MCU) said number N of said required resource units (RUi), if said number N of said required resource units (RUi) is smaller than said resource group length RG_L.

10. The mobile communication system as claimed in claim 7, wherein said RF resource allocating arrangement (10) is implemented in a base station (BS) of said mobile communication system (1).

11. A method for allocating RF resources to at least one mobile communication unit (MCU) connected in a mobile communication system (1), said method comprising steps of:
- combining resource units (RUi) to resource groups (RG), each resource group (RG) comprising a dedicated number of resource units (RUi) defining a resource group length RG_L;
- determining a number N of required resource units (RUi) said connected mobile communication unit (MCU) shall receive, and
- allocating to said connected mobile communication unit (MCU) an actual number of resource units (RUi) equal to an integer multiple (including one) of said resource group length RG_L, if said number N of said required resource units (RUi) is equal to or larger than said resource group length RG_L.

12. The method for allocating RF resources as claimed in claim 11, further comprising:
determining said integer multiple by performing an integer division of said number N of said required resource units (RUi) by said resource group length RG_L.

13. The method for allocating RF resources as claimed in claim 11, further comprising: allocating to said connected mobile communication unit (MCU) said number N of said required resource units (RUi), if said number N of said required resource units (RUi) is smaller than said resource group length RG_L.

14. A computer program product comprising code means for performing the steps of the method as claimed in claim 11.

## Amended claims

### Amended claims in accordance with Rule 137(2) EPC.

**1.** An arrangement (10) for allocating RF resources to at least one mobile communication unit (MCU) connected in a mobile communication system (1), said arrangement (10) comprising:
- Resource unit grouping means (11) configured for combining resource units (RUi) to resource groups (RG), each resource group (RG) comprising a dedicated number of resource units (RUi) defining a resource group length RG_L;
- Scheduling means (12) configured for determining a number N of required resource units (RUi) the connected mobile communication unit (MCU) shall receive, and
- Resource unit allocating means (13) configured for allocating to said connected mobile communication unit (MCU) an actual number N' of resource units (RUi) equal to an integer multiple - including one - of said resource group length RG_L, if said number N of required resource units (RUi) is equal to or larger than said resource group length RG_L, **characterized in that**
said resource unit allocating means (13) are configured for determining said integer multiple by performing an integer division of said number N of required resource units (RUi) by said resource group length RG_L such that said actual number N' of said allocated resource units (RUi) is less than or equal to said required number N of resource units (RUi).

**2.** The arrangement for allocating RF resources as claimed in claim 1, wherein said resource unit allocating means (13) are configured for allocating to said connected mobile communication unit (MCU) said number N of required resource units (RUi), if said number N of said required resource units (RUi) is smaller than said resource group length RG_L.

**3.** A base station (BS) for a mobile communication system (1), said base station (BS) comprising an arrangement (10) according to claim 1 or 2 for allocating RF resources to at least one mobile communication unit (MCU) connected to said base station (BS).

**4.** A mobile communication system (1), in particular a radio network, including an arrangement (10) according to claim 1 or 2 for allocating RF resources to at least one mobile communication unit (MCU) connected in said communication system (1).

**5.** The mobile communication system as claimed in claim 4, wherein said RF resource allocating arrangement (10) is implemented in a base station (BS) of said mobile communication system (1).

**6.** A method for allocating RF resources to at least one mobile communication unit (MCU) connected in a mobile communication system (1), said method comprising steps of:
- combining resource units (RUi) to resource groups (RG), each resource group (RG) comprising a dedicated number of resource units (RUi) defining a resource group length RG_L;
- determining a number N of required resource units (RUi) said connected mobile communication unit (MCU) shall receive, and
- allocating to said connected mobile communication unit (MCU) an actual number of resource units (RUi) equal to an integer multiple - including one - of said resource group length RG_L, if said number N of said required resource units (RUi) is equal to or larger than said resource group length RG_L,
**characterized by**
determining said integer multiple by performing an integer division of said number N of said required resource units (RUi) by said resource group length RG_L such that said actual number N' of said allocated resource units (RUi) is less than or equal to said required number N of said resource units (RUi).

**7.** The method for allocating RF resources as claimed in claim 6, further comprising: allocating to said connected mobile communication unit (MCU) said number N of said required resource units (RUi), if said number N of said required resource units (RUi) is smaller than said resource group length RG_L.

**8.** A computer program product comprising code means for performing the steps of the method as claimed in claim 6.
